# EUROPEAN PATENT APPLICATION

(11) **EP 3 296 693 A1**
(43) Date of publication of application: **21.03.2018**
(21) Application number: 17178894.6
(22) Date of filing: 30.06.2017
(51) Int. Cl.: G01C 19/72, G01N 29/00, G02B 6/10, G02B 6/122, G01K 11/32

(54) **DOUBLE-LAYER HIGH-CONFINEMENT ACOUSTO-OPTIC WAVEGUIDE**

(30) Priority: 20.09.2016 US 201662397082 P; 14.12.2016 US 201615379165
(71) Applicant: Honeywell International Inc., Morris Plains, NJ 07950 (US)
(72) Inventor: PUCKETT, Matthew Wade, Morris Plains, NJ 07950 (US)
(74) Representative: Houghton, Mark Phillip

(57) **Abstract**

An acousto-optic waveguide (100) comprises a cladding region (110) comprising a first material having a first refractive index and a first acoustic velocity, and a pair of optical waveguide layers (120,122) embedded in and extending through the cladding region. The optical waveguide layers are separated from one another by a gap region (130) comprising the first material. The optical waveguide layers (120,122) each comprise a second material having a second refractive index that is higher than the first refractive index and a second acoustic velocity that is higher than the first acoustic velocity. The optical waveguide layers (120,122) substantially confine acoustic waves that are generated during optical signal propagation through the acousto-optic waveguide. The acoustic waves are substantially confined to the area around the optical waveguide layers (120,122) and the gap region (130) along the direction of the optical signal propagation.

## Description

### STATEMENT REGARDING FEDERALLY SPONSORED RESEARCH OR DEVELOPMENT

This invention was made with Government support under N66001-16-C-4017 awarded by SPAWAR Systems Center Pacific. The Government has certain rights in the invention. This material is based upon work supported by the Defense Advanced Research Projects Agency (DARPA) and Space and Naval Warfare Systems Center Pacific (SSC Pacific).

### CROSS REFERENCE TO RELATED APPLICATION

This application claims the benefit of priority to U.S. Provisional Application No. 62/397,082, filed on September 20, 2016, which is herein incorporated by reference.

### BACKGROUND

Brillouin scattering, an interaction between light and sound that results in the exchange of energy among optical wavelengths, can be leveraged to create high-sensitivity integrated ring laser gyroscopes. Brillouin scattering benefits both from low-loss guiding of light and guiding of acoustic waves, but typically, it is difficult to attain both of these properties simultaneously.

In the past, high Brillouin gain coefficients have been realized in integrated devices by suspending unclad waveguides in air, thereby removing the path by which acoustic waves can radiate away. However, this technique comes at the cost of increasing optical propagation loss, due to the increased overlap of the optical mode with high-index-contrast material interfaces. Furthermore, unclad waveguides such as these are very susceptible to physical damage, making them less viable for practical or commercial applications.

Alternatively, ultra-low loss waveguides have been produced by reducing optical confinement in thin films of silicon nitride surrounded by silicon dioxide. In these devices, low propagation loss cannot be attained without expanding the mode area, and no acoustic guiding is present. The Brillouin gain coefficient of these devices is thus expected to be low.

### SUMMARY

An acousto-optic waveguide comprises a cladding region comprising a first material having a first refractive index and a first acoustic velocity, and a pair of optical waveguide layers embedded in and extending through the cladding region. The optical waveguide layers are separated from one another by a gap region comprising the first material. The optical waveguide layers each comprise a second material having a second refractive index that is higher than the first refractive index and a second acoustic velocity that is higher than the first acoustic velocity. The optical waveguide layers substantially confine acoustic waves that are generated during optical signal propagation through the acousto-optic waveguide. The acoustic waves are substantially confined to the area around the optical waveguide layers and the gap region along the direction of the optical signal propagation.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a cross-sectional end view of a double-layer acousto-optic waveguide, according to one embodiment;
Figures 2A-2F are cross-sectional end views showing an exemplary method of fabricating a double-layer acousto-optic waveguide;
Figure 3 is a cross-sectional side view of a double-layer acousto-optic waveguide, according to an exemplary embodiment;
Figure 4 is a modeled graphical representation of the optical TM-like mode for the double-layer acousto-optic waveguide of Figure 3;
Figure 5 is a graph of a simulated gain coefficient for a single layer waveguide and a double-layer acousto-optic waveguide; and
Figure 6 is a perspective view of an integrated fiber optic gyroscope that employs a double-layer acousto-optic waveguide, according to an exemplary embodiment.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A double-layer acousto-optic waveguide with high-confinement of acoustic waves is described herein. The acousto-optic waveguide is fabricated such that acoustic waves are tightly confined to a small cross-sectional area, thereby enhancing the Brillouin gain coefficient by orders of magnitude, without significantly increasing propagation loss.

In one embodiment of the acousto-optic waveguide, two optical waveguide layers with a higher acoustic velocity than a surrounding cladding material are displaced from one another. The displacement creates a confinement area for the acoustic waves generated between the optical waveguide layers through the photoelastic effect. This technique allows for a drastically increased Brillouin gain coefficient without making concessions in terms of the optical propagation loss of the acousto-optic waveguide. In comparison to previous techniques, the present approach benefits from high degrees of both acoustic and optical confinement, without doing so at the expense of optical loss.

The present acousto-optic waveguide supports a TM-like mode, which is strongly confined to the space between the two waveguide layers, and will therefore generate strong acoustic waves in this same region through the photoelastic effect. These acoustic waves are substantially confined in a vertical direction, which is perpendicular to a direction of optical signal propagation, by the double-layer waveguide structure. The acoustic waves also do not radiate substantially in a lateral direction if sufficiently wide waveguide layers are employed. As a result, the Brillouin gain coefficient of the double-layer waveguide structure is significantly increased relative to more conventional waveguide structures possessing only a single guiding layer.

Further details of the present waveguide and methods of fabrication are described hereafter with reference to the drawings.

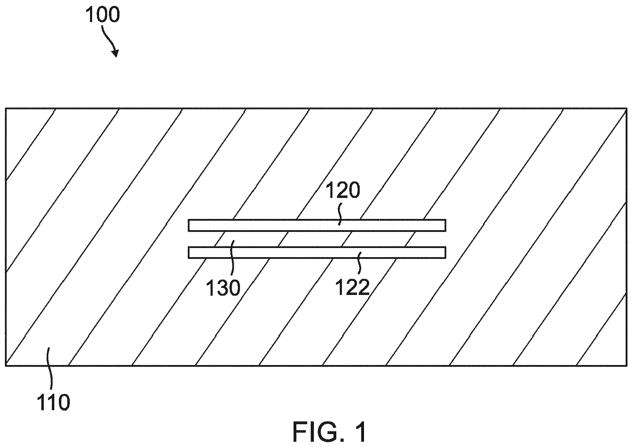

Figure 1 illustrates a double-layer acousto-optic waveguide 100, according to one embodiment. The acousto-optic waveguide 100 generally includes a cladding region 110, and a pair of optical waveguide layers 120, 122, displaced from one another and embedded in cladding region 110. The cladding region 110 is composed of a first material having a first refractive index and a first acoustic velocity, which is the speed of sound through the first material. The optical waveguide layers 120, 122 are composed of a second material having a second refractive index and a second acoustic velocity, which is the speed of sound through the second material. The second refractive index of the second material is higher than the first refractive index of the first material, and the second acoustic velocity of the second material is higher than the first acoustic velocity of the first material. The optical waveguide layers 120, 122 are separated from one another by a gap region 130 comprising the first material.

The optical waveguide layers 120, 122 are configured to substantially confine acoustic waves that are generated during optical signal propagation through acousto-optic waveguide 100. The acoustic waves are substantially confined to the area around optical waveguide layers 120, 122 and gap region 130 along the direction of the optical signal propagation.

The first material of cladding region 110 and gap region 130 can be composed of various cladding materials, such as silicon dioxide (SiO₂), silicon oxynitride, zinc oxide (ZnO), aluminum oxide (Al₂O₃), calcium fluoride (CaF₂), or combinations thereof.

The second material of optical waveguide layers 120, 122 can be composed of various guiding materials, such as silicon, silicon nitride (SiNx), silicon oxynitride (SiON), silicon carbide (SiC), diamond, silicon germanium (SiGe), germanium, gallium arsenide (GaAs), gallium nitride (GaN), gallium phosphide (GaP), lithium niobate (LiNbO₃), or combinations thereof.

In one embodiment of acousto-optic waveguide 100, gap region 130 can have a thickness that is less than a thickness of each of optical waveguide layers 120, 122. For example, gap region 130 can have a thickness of about 50 nm to about 200 nm, while optical waveguide layers 120, 122 can each have a thickness of about 100 nm to about 300 nm.

Various methods can be used to fabricate the different layers of acousto-optic waveguide 100, such as plasma enhanced chemical vapor deposition (PECVD), sputtering, low pressure CVD, atomic layer deposition, combinations thereof, or the like.

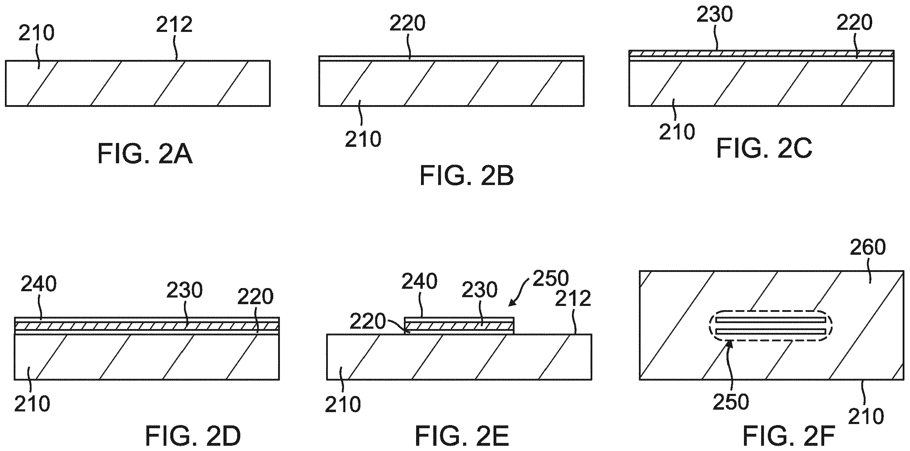

Figures 2A-2F depict an exemplary method of fabricating a double-layer acousto-optic waveguide. Fabrication of the acousto-optic waveguide begins with a wafer substrate 210 having an upper surface 212, as shown in Figure 2A. The wafer substrate 210 can be formed of a first material that possesses a lower refractive index and a lower acoustic velocity, such as silicon dioxide. Next, a first guiding layer 220 is formed by depositing a second material on upper surface 212 of wafer substrate 210, as shown in Figure 2B. The second material has a higher refractive index and a higher acoustic velocity than the first material. For example, the second material can be silicon nitride deposited to have a thickness of about 100 nm to about 300 nm on a silicon dioxide wafer using PECVD.

A gap film layer 230 is then formed, by depositing the same first material as the wafer substrate, over first guiding layer 220, as depicted in Figure 2C. For example, film layer 230 can be formed by depositing a layer of silicon dioxide having a thickness of about 50 nm to about 200 nm. Thereafter, a second guiding layer 240 is formed by depositing the second material, having the higher refractive index and higher acoustic velocity, over film layer 230, as shown in Figure 2D. For example, the second material can again be silicon nitride deposited to have a thickness of about 100 nm to about 300 nm on a silicon dioxide layer using PECVD.

As shown in Figure 2E, a double-layer waveguide structure 250 is then formed by etching layers 240, 230, and 220, such as through conventional electron-beam lithography or photolithography-based procedures, followed by either wet etching or reactive ion etching, for example. This leaves exposed portions of upper surface 212 of wafer substrate 210 on either side of double-layer waveguide structure 250. Finally, an additional amount of the first material, such as silicon dioxide, is deposited over double-layer waveguide structure 250 and the exposed portions of upper surface 212. As depicted in Figure 2F, this forms a cladding region 260, which with wafer substrate 210, surrounds double-layer waveguide structure 250.

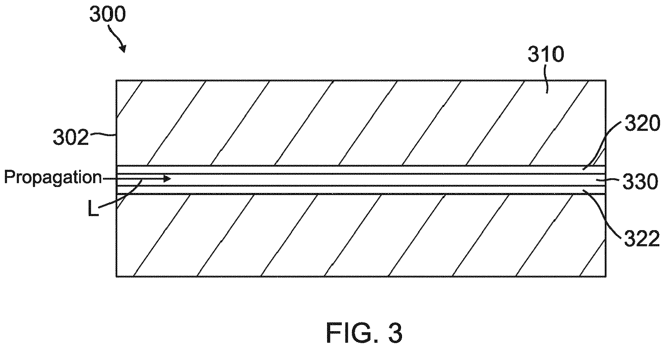

Figure 3 illustrates a cross-sectional side view of a double-layer acousto-optic waveguide 300, according to an exemplary embodiment, which can be fabricated as described previously. The acousto-optic waveguide 300 generally includes a cladding region 310, and a pair of optical waveguide layers 320, 322, displaced from one another and embedded in cladding region 310. In this embodiment, the cladding region 310 can be composed of silicon dioxide, and optical waveguide layers 320, 322 can be composed of silicon nitride each with a thickness of about 240 nm. The optical waveguide layers 320, 322 are separated from each other by a gap 330 of silicon dioxide having a thickness of about 100 nm.

As illustrated in Figure 3, during operation of acousto-optic waveguide 300, light (L) is coupled into an edge 302 and propagates through optical waveguide layers 320, 322. The acousto-optic waveguide 300 will support an optical TM-like mode that is strongly confined to the space between optical waveguide layers 320, 322, and will therefore generate strong acoustic waves in this same region through the photoelastic effect.

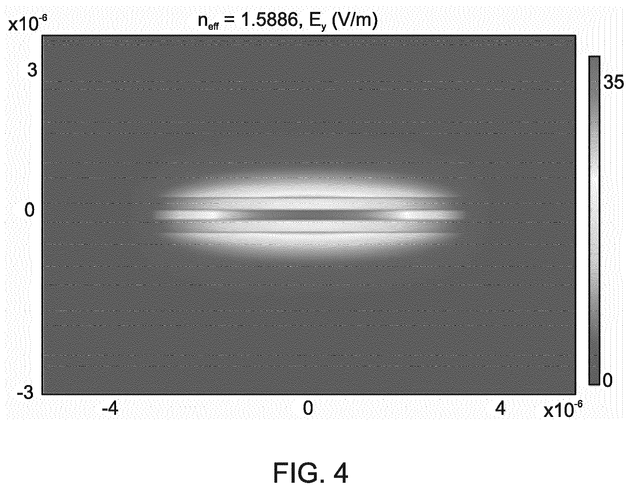

Figure 4 is a modeled graphical representation of the optical TM-like mode for waveguide device 300, showing that acoustic waves are substantially confined in a vertical direction by the double-layer waveguide structure, and do not radiate substantially in a lateral direction. In Figure 4, the profile of the optical TM-like mode is illustrated, and the effective index of the mode is listed. The 0 to 35 scale represents the range of values covered by the arbitrarily scaled electric field, in units of V/m. The optical mode reaches its maximum in the slot between the two waveguides. As a result, the Brillouin gain coefficient of the double-layer waveguide structure is significantly increased relative to more conventional structures possessing only a single guiding layer.

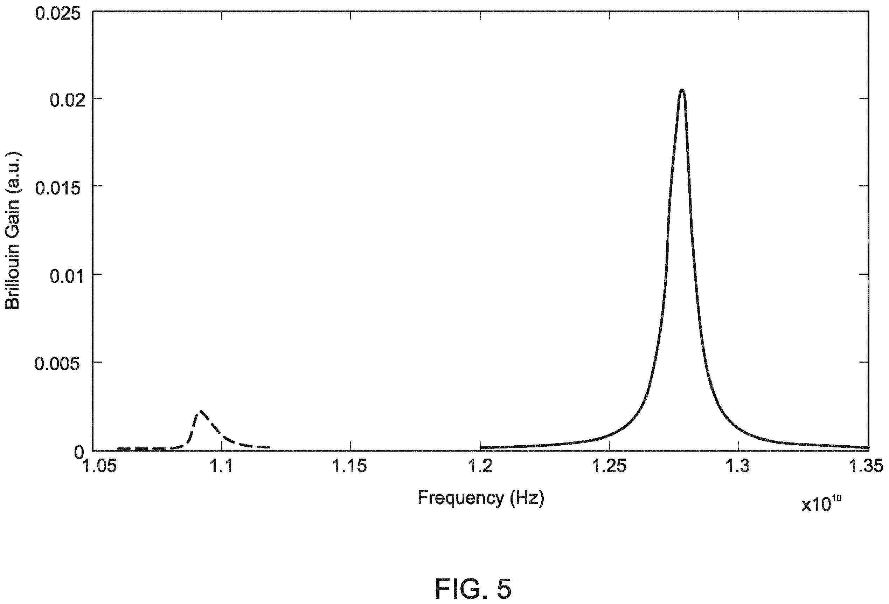

This feature is illustrated in Figure 5, which is a graph of a simulated gain coefficient for a conventional single layer waveguide and the present double-layer waveguide structure. The graph of Figure 5 shows plots of Brillouin gain with respect to frequency for the single layer waveguide (dashed line) and the double-layer waveguide structure (solid line). As shown in Figure 5, the Brillouin gain is significantly increased for the double-layer waveguide structure when compared to the single layer waveguide.

The double-layer acousto-optic waveguide disclosed herein may be used, for example, in an integrated photonics circuit, in either a straight waveguide or a resonator, to couple energy from a forward propagating pump wave into a counterpropagating Stokes wave. This process may be cascaded multiple times, corresponding to the generation of higher-order Stokes waves propagating in alternating directions. The Stokes waves may act as carriers for data encoded in the optical regime, may serve to monitor the Sagnac effect in optical gyroscopes, or may monitor the temperature and stress in the constituent integrated photonics circuit.

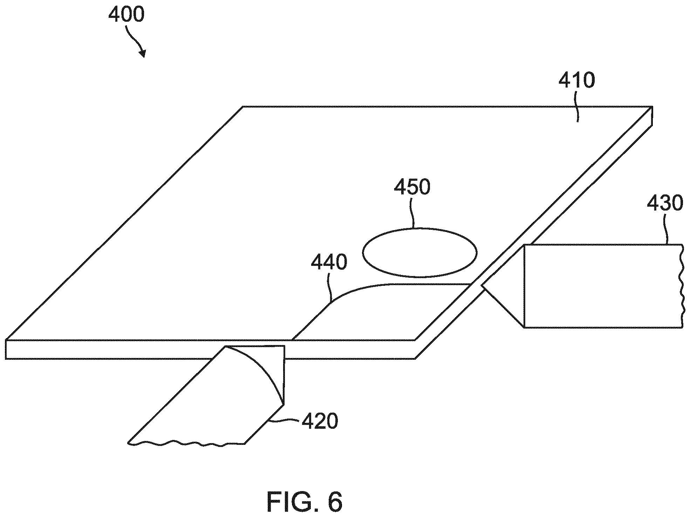

Figure 6 illustrates an example of an integrated fiber optic gyroscope 400, which can employ the double-layer acousto-optic waveguide. The gyroscope 400 includes an integrated photonics chip 410, which is in optical communication with an input optical fiber 420 and an output optical fiber 430. The input optical fiber 410 directs a light beam from a source to an acousto-optic waveguide 440 in photonics chip 410. Counterpropagating light beams are generated in one or more ring resonators 450 coupled to acousto-optic waveguide 440 in photonics chip 410. The beat frequencies of the counterpropagating light beams are used to determine the rate of rotation based on output optical signals received by output optical fiber 430.

### Example Embodiments

Example 1 includes an acousto-optic waveguide, comprising: a cladding region comprising a first material having a first refractive index and a first acoustic velocity; and a pair of optical waveguide layers embedded in and extending through the cladding region, the optical waveguide layers separated from one another by a gap region comprising the first material, the optical waveguide layers each comprising a second material having a second refractive index that is higher than the first refractive index and a second acoustic velocity that is higher than the first acoustic velocity; wherein the optical waveguide layers substantially confine acoustic waves that are generated during an optical signal propagation through the acousto-optic waveguide, the acoustic waves substantially confined to the area around the optical waveguide layers and the gap region along the direction of the optical signal propagation.

Example 2 includes the acousto-optic waveguide of Example 1, wherein the first material comprises silicon dioxide, silicon oxynitride, zinc oxide, aluminum oxide, calcium fluoride, or combinations thereof.

Example 3 includes the acousto-optic waveguide of any of Examples 1-2, wherein the second material comprises silicon, silicon nitride, silicon oxynitride, silicon carbide, diamond, silicon germanium, germanium, gallium arsenide, gallium nitride, gallium phosphide, lithium niobate, or combinations thereof.

Example 4 includes the acousto-optic waveguide of any of Examples 1-3, wherein the gap region has a thickness that is less than a thickness of each of the optical waveguide layers.

Example 5 includes the acousto-optic waveguide of any of Examples 1-4, wherein the gap region has a thickness of about 50 nm to about 200 nm.

Example 6 includes the acousto-optic waveguide of any of Examples 1-5, wherein the optical waveguide layers each have a thickness of about 100 nm to about 300 nm.

Example 7 includes the acousto-optic waveguide of any of Examples 1-6, wherein the acousto-optic waveguide is implemented in an integrated photonics circuit.

Example 8 includes the acousto-optic waveguide of Example 7, wherein the integrated photonics circuit is part of a fiber optic gyroscope.

Example 9 includes a method of fabricating an acousto-optic waveguide, the method comprising: providing a wafer substrate having an upper surface, the wafer substrate formed of a first material having a first refractive index and a first acoustic velocity; forming a first guiding layer of a second material on the upper surface of the wafer substrate, the second material having a higher refractive index and a higher acoustic velocity than the first material; forming a gap film layer of the first material over the first guiding layer; forming a second guiding layer of the second material over the gap film layer; removing portions of the second guiding layer, the gap film layer, and the first guiding layer to produce a double-layer waveguide structure, leaving exposed portions of the upper surface of the wafer substrate on either side of the double-layer waveguide structure; and forming a cladding layer of the first material over the double-layer waveguide structure and the exposed portions of the upper surface of the wafer substrate.

Example 10 includes the method of Example 9, wherein the first material comprises silicon dioxide, silicon oxynitride, zinc oxide, aluminum oxide, calcium fluoride, or combinations thereof.

Example 11 includes the method of any of Examples 9-10, wherein the second material comprises silicon, silicon nitride, silicon oxynitride, silicon carbide, diamond, silicon germanium, germanium, gallium arsenide, gallium nitride, gallium phosphide, lithium niobate, or combinations thereof.

Example 12 includes the method of any of Examples 9-11, wherein the gap film layer is formed to have a thickness that is less than a thickness of each of the first and second guiding layers.

Example 13 includes the method of any of Examples 9-12, wherein the first guiding layer is formed to have a thickness of about 100 nm to about 300 nm.

Example 14 includes the method of any of Examples 9-13, wherein the gap film layer is formed to have a thickness of about 50 nm to about 200 nm.

Example 15 includes the method of any of Examples 9-14, wherein the second guiding layer is formed to have a thickness of about 100 nm to about 300 nm.

Example 16 includes the method of any of Examples 9-15, wherein the first and second guiding layers each comprise silicon nitride.

Example 17 includes the method of any of Examples 9-16, wherein the wafer substrate, the gap film layer, and the cladding layer each comprise silicon dioxide.

Example 18 includes the method of any of Examples 9-17, wherein the first guiding layer, the gap film layer, and the second guiding layer are each formed by a process comprising plasma enhanced chemical vapor deposition, sputtering, low pressure chemical vapor deposition, atomic layer deposition, or combinations thereof.

Example 19 includes the method of any of Examples 9-18, wherein the portions of the second guiding layer, the gap film layer, and the first guiding layer are removed by a process comprising electron-beam lithography or a photolithography-based procedure, followed by wet etching or reactive ion etching.

Example 20 includes the method of any of Examples 9-19, wherein the acousto-optic waveguide is formed as part of an integrated photonics circuit.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. An acousto-optic waveguide, comprising:
a cladding region comprising a first material having a first refractive index and a first acoustic velocity; and
a pair of optical waveguide layers embedded in and extending through the cladding region, the optical waveguide layers separated from one another by a gap region comprising the first material, the optical waveguide layers each comprising a second material having a second refractive index that is higher than the first refractive index and a second acoustic velocity that is higher than the first acoustic velocity;
wherein the optical waveguide layers substantially confine acoustic waves that are generated during an optical signal propagation through the acousto-optic waveguide, the acoustic waves substantially confined to the area around the optical waveguide layers and the gap region along the direction of the optical signal propagation.

2. The acousto-optic waveguide of claim 1, wherein the first material comprises silicon dioxide, silicon oxynitride, zinc oxide, aluminum oxide, calcium fluoride, or combinations thereof.

3. The acousto-optic waveguide of claim 1, wherein the second material comprises silicon, silicon nitride, silicon oxynitride, silicon carbide, diamond, silicon germanium, germanium, gallium arsenide, gallium nitride, gallium phosphide, lithium niobate, or combinations thereof.

4. The acousto-optic waveguide of claim 1, wherein the gap region has a thickness that is less than a thickness of each of the optical waveguide layers.

5. The acousto-optic waveguide of claim 1, wherein the gap region has a thickness of about 50 nm to about 200 nm.

6. The acousto-optic waveguide of claim 1, wherein the optical waveguide layers each have a thickness of about 100 nm to about 300 nm.

7. The acousto-optic waveguide of claim 1, wherein the acousto-optic waveguide is implemented in an integrated photonics circuit.

8. The acousto-optic waveguide of claim 7, wherein the integrated photonics circuit is part of a fiber optic gyroscope.

9. A method of fabricating an acousto-optic waveguide, the method comprising:
providing a wafer substrate having an upper surface, the wafer substrate formed of a first material having a first refractive index and a first acoustic velocity;
forming a first guiding layer of a second material on the upper surface of the wafer substrate, the second material having a higher refractive index and a higher acoustic velocity than the first material;
forming a gap film layer of the first material over the first guiding layer;
forming a second guiding layer of the second material over the gap film layer;
removing portions of the second guiding layer, the gap film layer, and the first guiding layer to produce a double-layer waveguide structure, leaving exposed portions of the upper surface of the wafer substrate on either side of the double-layer waveguide structure; and
forming a cladding layer of the first material over the double-layer waveguide structure and the exposed portions of the upper surface of the wafer substrate.

10. The method of claim 9, wherein:
the first guiding layer, the gap film layer, and the second guiding layer are each formed by a process comprising plasma enhanced chemical vapor deposition, sputtering, low pressure chemical vapor deposition, atomic layer deposition, or combinations thereof; and the portions of the second guiding layer, the gap film layer, and the first guiding layer are removed by a process comprising electron-beam lithography or a photolithography-based procedure, followed by wet etching or reactive ion etching.
